# EUROPÄISCHE PATENTSCHRIFT

(11) **EP 1 410 892 B1**
(45) Veröffentlichungstag und Bekanntmachung des Hinweises auf die Patenterteilung: **20.08.2008**
(21) Anmeldenummer: 03017264.7
(22) Anmeldetag: 30.07.2003
(51) Int. Cl.: B29C 45/28

(54) **Heißkanalspritzgusswerkzeug mit einer Vorrichtung zum Öffnen und Schliessen von Einspritzdüsen**
Hot runner mold with a device for opening and closing injection nozzles
Moule à canaux chauds avec un appareil pour ouvrir et fermer des buses d'injection

(30) Priorität: 18.10.2002 DE 20216125 U
(43) Veröffentlichungstag der Anmeldung: 21.04.2004
(73) Patentinhaber: Heitec- Heisskanaltechnik GmbH, 35099 Burgwald-Bottendorf (DE)
(72) Erfinder: Schreck, Hans, D-35099 Burgwald-Bottendorf (DE)
(74) Vertreter: Böck, Bernhard

(56) Entgegenhaltungen:
- DE-U- 20 118 609
- US-A- 4 378 963
- PATENT ABSTRACTS OF JAPAN vol. 2000, no. 15, 6. April 2001 (2001-04-06) -& JP 2000 343560 A (NIPPON DME KK;TAIYU SEIKO:KK), 12. Dezember 2000 (2000-12-12)
- PATENT ABSTRACTS OF JAPAN vol. 018, no. 418 (M-1650), 5. August 1994 (1994-08-05) & JP 06 126412 A (SEIKICHI NAKAJIMA;OTHERS: 02), 10. Mai 1994 (1994-05-10)
- PATENT ABSTRACTS OF JAPAN vol. 1995, no. 08, 29. September 1995 (1995-09-29) & JP 07 125015 A (SANSHO GIKEN KK), 16. Mai 1995 (1995-05-16)

## Beschreibung

Die Erfindung betrifft ein Heißkanalspritzgusswerkzeug mit einer Vorrichtung zum Öffnen und Schließen von Einspritzdüsen, wobei die Einspritzdüse einen Düsenkörper aufweist, dessen Düsenöffnung durch eine Nadel öffen- und verschließbar ist, nach dem Oberbegriff des Anspruchs 1.

Vorrichtungen der in Rede stehenden Art finden beispielsweise, jedoch keineswegs ausschließlich in der sogenannten Heißkanaltechnik Verwendung, bei der die zu verarbeitende Formmasse über geheizte Kanäle, Ventile und Düsen getaktet in den Formhohlraum gespritzt wird. Dabei sind die Einspritzdüsen regelmäßig als Nadelventile oder Nadeldüsen ausgebildet, bei der die Spitze einer Nadel zum Vcrschließen der Düse gegen einen form- und funktionskomplementären Sitz im Düsenkörper gedrückt und zum Öffnen von diesem angehoben wird.

Es ist eine Vorrichtung bekannt, bei der die Nadel an einer Kolbenplatte ortsfest angeordnet ist, die nach Art eines doppelt wirkenden Zylinders in einer Aufnahme in beiden axialen Richtungen verschieblich gelagert ist, wobei auf der der Nadel abgewandten Seite der Kolbenplatte ein erster Arbeitsraum und auf der gegenüberliegenden Seite der Kolbenplatte ein zweiter Arbeitsraum gebildet ist, der zur Betätigung der Nadel mit Fluid beaufschlagbar ist, und wobei die Nadel durch eine Ausnehmung in einem der Kolbenplatte gegenüberliegenden Abschlusselement aus dem zweiten Arbeitsraum nach außen geführt ist. Nachteilig bei dieser bekannten Vorrichtung ist jedoch, dass die Kolbenplatte eine vergleichsweise große Masse aufweist, wobei zudem aufgrund der Bauart bei mehreren Nadeln der mögliche Nadelabstand und damit verbunden der mögliche Einspritzdüsenabstand vergleichsweise groß ist.

Aus der JP 07125015 A ist ein Heißkanalspritzgusswerlczeug mit einer Kolbenplatte mit ortsfesten Nadeln zum Öffnen und Schließen von Einspritzdüsen bekannt. Auf einer der Nadeln abgewandten Seite der Kolbenplatte ist ein erster Arbeitsraum und auf einer gegenüberliegenden Seite der Kolbenplatte ein zweiter Arbeitsraum gebildet. Die Nadeln werden durch die Kolbenplatte, welche in einer Abschlussplatte des zweiten Arbeitsraums geführt ist nach Außen geführt. Die Kolbenplatte wird mit Druckluft betätigt, was eine Mindestgröße der Kolbenplatte erforderlich macht. Aufgrund der Mindestgröße der Kolbenplatte können zwei beheizte Einspritzdüsen nur in einem relativ großen Abstand zu ein-an der angeordnet werden, da jede Düse jeweils von einem Kolben betätigt wird. Das technische Problem der JP 07125015 A, eine Kolbenplatte bzw. einen Kolben der in seinem Durchmesser nicht verringert werden kann, wird dadurch gelöst, dass an der Kolbenplatte zwei Nadeln befestigt sind.

Aus der JP-200034350 ist ein Heißkanalspritzgusswerkzeug mit den Merkmalen des Oberbegriffs des Anspruchs 1 bekannt, bei dem eine Kolbenplatte mit einer Mehrzahl von Nadeln vorgesehen ist, wobei jede Nadel durch jeweils eine Ausnehmung in dem der Kolbenplatte gegenüberliegenden Abschlusselement geführt ist, und zur Abdichtung eines Kolbcnraums jeweils zwischen einer Wand der Ausnehmungen und den Nadeln Dichtelemente angeordnet sind, die unmittelbar an den Nadel zur Anlage gelangen.

Es ist Aufgabe der Erfindung, ein Heißkanalspritzgusswerkzeug mit einer Vorrichtung zum Öffnen und Schließen von Einspritzdüsen vorzuschlagen.

Diese Aufgabe wird durch eine Vorrichtung nach der Lehre des Anspruchs 1 gelöst.

Vorteilhafte Ausgestaltungen der Erfindung sind Gegenstand der Unteransprüche.

Das erfindungsgemäße Heißkanalspritzgusswerkzeug weist eine Einspritzdüse und einen Düsenkörper auf, dessen Düsenöffnung durch eine Nadel öffen- und verschließbar ist, wobei eine Mehrzahl von Nadeln an einer Kolbenplatte ortsfest angeordnet ist, die nach Art eines doppeltwirkenden Zylinders in einer Aufnahme in beiden axialen Richtungen verschieblich gelagert ist, wobei auf der den Nadeln abgewandten Seite der Kolbenplatte ein erster Arbeitsraum und auf der gegenüberliegenden Seite der Kolbenplatte ein zweiter Arbeitsraum gebildet ist, der zur Betätigung der Nadeln mit Fluid beaufschlagbar ist und wobei zwischen einem der Kolbenplatte gegenüberliegenden Abschlusselement und temperierten Bauteilen des Heißkanalspritzgusswerkzeuges ein temperaturisolierender Zwischenraum ausgebildet ist, und jede der Nadeln durch jeweils eine Ausnehmung in dem der Kolbenplatte gegenüberliegenden Abschlusselement aus dem zweiten Arbeitsraum nach außen geführt ist, wobei der zweite Arbeitsraum durch ein Dichtelement einer ersten Gattung, das zwischen der Innenwand der Aufnahme und der Kolbenplatte angeordnet ist, und weitere Dichtelemente einer zweiten Gattung, die jeweils zwischen einer Wand einer der Ausnehmungen und einer der Nadeln angeordnet sind und unmittelbar an den Nadeln zur Anlage gelangen, fluiddicht abgeschlossen wird.

Darüber hinaus sind in dem erfindungsgemäßen Heißkanalspritzgusswerkzeug Befestigungselemente vorgesehen, mit denen die unteren

Dichtelemente vorgespannt fixiert sind.

Hierdurch wird ein unbeabsichtigtes Lösen der weiteren Dichtelemente verhindert. Durch die Vorspannung, beispielsweie durch Verpressen eines O-Ring-förmigen Dichtelementes, kann die Dichtwirkung sichergestellt oder zumindest verbessert werden.

Nach einem Ausführungsbeispiel der Erfindung weist die Vorrichtung eine Grundplatte, eine Abschlussplatte und eine zwischen der Grundplatte und der Abschlussplatte angeordnete Zylinderplatte auf. Dabei ist in der Zylinderplatte die Aufnahme für die Kolbenplatte angeordnet; je nach Bedarf können auch mehrer Aufnahmen für mehrere Kolbenplatten in einer Zylinderplatte nebeneinander vorgesehen sein. Die Grundplatte schließt die Aufnahme, das heißt letztendlich den Zylinderinnenraum, wobei unter den Begriff "Zylinder" keineswegs nur kreiszylindrische oder rotationssymmetrische Geometrien fallen sollen, unter Bildung des ersten Arbeitsraums ab, während die Abschlussplatte die Aufnahme, also wiederum den Zylinderinnenraum, unter Bildung des zweiten Arbeitsraums abschließt. Dadurch lässt sich ein einfacher und kostengünstiger Aufbau der erfindungsgemäßen Vorrichtung erreichen.

Da im Regelfall bei der Verbindung von Grundplatte und Zylinderplatte aufgrund der Fertigungstoleranzen keine ausreichende Dichtwirkung erzielbar ist, ist vorzugsweise zwischen Grundplatte und Zylinderplatte ein die Aufnahme im wesentlichen geschlossen umlaufendes Dichtelement, beispielsweise in Form eines O-Rings, angeordnet, der beim Verschrauben von Grundplatte und Zylinderplatte dichtend verpresst wird.

In grundsätzlich der gleichen Weise kann zwischen Zylinderplatte und Abschlussplatte ein die Aufnahme im wesentlichen geschlossen umlaufendes Dichtelement angeordnet sein.

Nach einem weiteren Ausführungsbeispiel verläuft die Leitung zur Zuund Ableitung des Fluides in der Grundplatte und mündet in die Aufnahme oder, genauer, unmittelbar in den ersten Arbeitsraum.

In wiederum der gleichen Weise kann die Leitung zur Zu- und Ableitung des Fluides in der Abschlussplatte angeordnet sein und von dort in die Aufnahme oder, genauer, unmittelbar in den zweiten Arbeitsraum münden.

Vorzugsweise ist die Kolbenplatte im wesentlichen kreisscheibenförmig ausgebildet und die Ausnehmung ist dazu formkomplementär kreiszylindrisch.

Zur sicheren fluidischen Trennung der beiden Arbeitsräume ist die Kolbenplatte in an sich bekannter Weise im Bereich ihrer Außenumfangsfläche mit einer im wesentlichen geschlossen umlaufenden Ausnehmung versehen, in der das erste Dichtelement angeordnet ist. Vorzugsweise ist dabei das erste Dichtelement als O-Ring oder Lippendichtring ausgebildet.

Die Art der weiterer Dichtelemente zwischen Ausnehmung in der Abschlussplatte und der Nadel ist grundsätzlich beliebig, solange eine ausreichende Dichtwirkung gegeben ist. Vorzugsweise sind auch die weiterer Dichtelemente als O-Ring oder Lippendichtring ausgebildet.

Insbesondere wenn bei dünner oder großflächiger Kolbenplatte ein Verkanten ausgeschlossen werden soll und/oder bei langen Nadeln eine sicher radiale Positionierung sichergestellt werden soll, ist nach einem weiteren Ausführungsbeispiel der Erfindung zusätzlich zu den weiteren Dichtelementen in der Ausnehmung des Abschlusselementes bzw. der Abschlussplatte ein Führungselement zur Führung der Nadel angeordnet. Dieses kann beispielsweise als Radialkugellager ausgebildet sein. Vorzugsweise jedoch ist das Führungselement als insbesondere buchsenförmiges Radialgleitlager ausgebildet.

Um ein unbeabsichtigtes Lösen des Führungselementes zu verhindern, ist nach einem weiteren Ausführungsbeispiel das Führungselement durch das Befestigungselement fixierbar, insbesondere vorgespannt fixierbar ist.

Das Befestigungselement kann beispielsweise in einfachster Weise durch einen Seeger-Ring oder Sprengring gebildet werden. Vorzugsweise jedoch ist das Befestigungselement nach Art einer Madenschraube ausgebildet, die in ein in der Ausnehmung ausgebildetes Innengewinde einschraubbar ist, wobei das Befestigungselement eine axial durchgehende Ausnehmung aufweist, die von der Nadel mit zumindest geringem radialem Spiel durchgreifbar ist. Dadurch ist eine einfache Montage möglich.

Im folgenden wird die Erfindung anhand lediglich Ausführungsbeispiele zeigender Zeichnungen näher erläutert. Es zeigt
- **Fig. 1**: im schematischer Darstellung im Vertikalschnitt eine Vorrichtung nach dem Stand der Technik;
- **Fig. 2**: ein Ausführungsbeispiel einer nicht erfindungsgemäßen Vorrichtung in einer der Fig. 1 entsprechenden Darstellung;
- **Fig. 3**: ein Ausführungsbeispiel eines Erfindungsgemäßen Heipkanalspritzgusswerkzeugs ebenfalls in schematischer Schnittdarstellung; und
- **Fig. 4**: die Einzelheit X aus Fig. 3 in vergrößerter Darstellung.

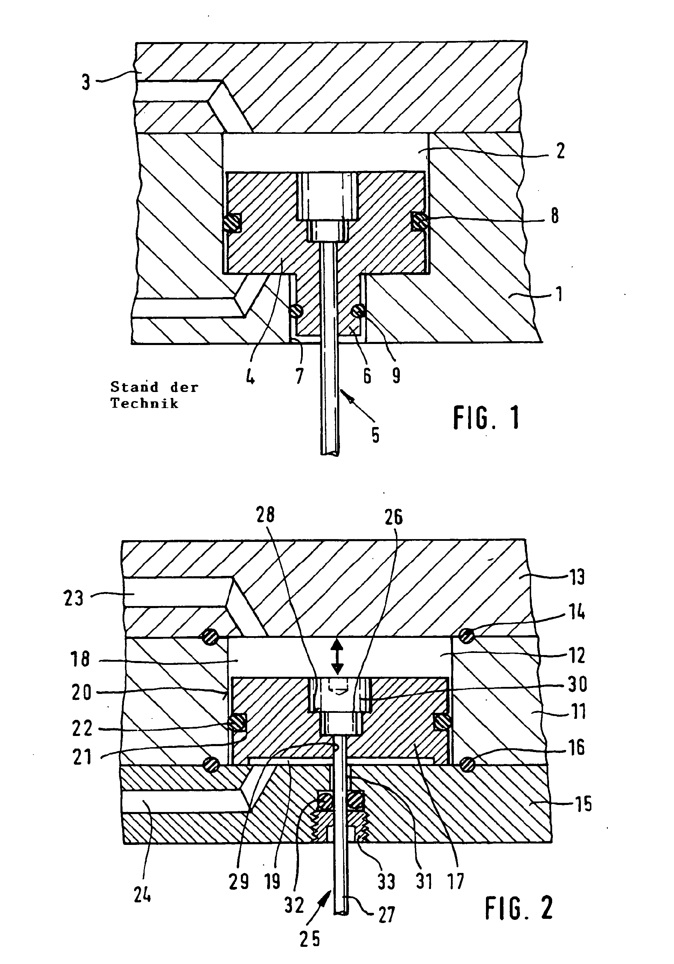

Die in der Fig. 1 dargestellte Vorrichtung entspricht dem Stand der Technik. Diese bekannte Vorrichtung weist eine Basisplatte 1 auf, in der eine zylindrische Aufnahme 2 angeordnet ist. Stirnseitig ist die Aufnahme 2 mit einer Platte 3 verschlossen. In der Aufnahme 2 ist eine Kolbenplatte 4 angeordnet, die in axialer Richtung in der Aufnahme 2 beweglich gelagert ist. An der Kolbenplatte 4 ist eine Nadel 5 derart angeordnet, dass der Kopf der Nadel 5 in einer Ausnehmung der Kolbenplatte befestigt ist. Die Kolbenplatte weist einen Absatz 6 auf, der in einer Ausnehmung 7 der Basisplatte geführt ist. Die Abdichtung des zweiten Arbeitsraumes, der in der Darstellung nach Fig. 1 sein Minimum erreicht hat, erfolgt nach oben über ein Dichtelement 8 und nach unten über ein Dichtelement 9. Aufgrund des Absatzes 6 weist die Kolbenplatte eine vergleichsweise große Masse auf; zudem ist die Anordnung mehrere Nadeln nebeneinander nur mit vergleichsweise großem Abstand möglich.

Das in der Fig. 2 dargestellte Ausführungsbeispiel einer Vorrichtung weist eine Zylinderplatte 11 auf, in der eine durchgehende zylinderförmige Aufnahme 12 angeordnet ist. An der Zylinderplatte 11 ist eine Grundplatte 13 angeordnet und durch nicht dargestellte Schrauben befestigt. Zwischen der Grundplatte 13 und der Zylinderplatte 11 ist ein O-Ring-förmiges Dichtelement 14 angeordnet, das die zur Grundplatte 13 weisende stirnseitige Öffnung der Aufnahme 12 geschlossen umläuft. Beim Verschrauben der Grundplatte 13 mit der Zylinderplatte 11 wird der O-Ring verpresst und dichtet somit die beiden Platten gegeneinander und damit die Aufnahme 12 nach außen ab.

In ähnlicher Weise ist an der Zylinderplatte 11 eine der Grundplatte 13 gegenüberliegende Abschlussplatte 1 angeordnet. Die Abdichtung zwischen Zylinderplatte 11 und Abschlussplatte erfolgt wiederum über ein O-Ring-förmiges Dichtelement 16.

In der Aufnahme 12 der Zylinderplatte 11 ist eine Kolbenplatte 17 in axialer Richtung beweglich angeordnet. Die Kolbenplatte 17 teilt die Aufnahme 12 in den ersten Arbeitsraum 18 und den zweiten Arbeitsraum 19. Die Kolbenplatte 17 ist im Bereich ihrer Außenumfangsfläche 20 mit einer umlaufenden Nut 21 versehen, in der ein geschlossen umlaufender O-Ring als erstes Dichtelement 22 angeordnet ist. Dadurch ist bei freier axialer Beweglichkeit der Kolbenplatte eine fluiddichte Trennung der beiden Arbeitsräume 18 und 19 gegeben.

Weiter ist in der Grundplatte 13 und der Abschlussplatte 15 jeweils eine Anschlussleitung 23 und 24 angeordnet, mit der das Betätigungsfluid, beispielsweise Druckluft oder Hydrauliköl, in die Arbeitsräume 18 und 19 geführt oder aus diesen abgeführt werden kann. Dadurch kann in an sich bekannter Weise nach Art eines doppelt wirkenden Zylinders die Kolbenplatte 17 in der Aufnahme 12 hin und her bzw. auf und ab bewegt werden.

An der Kolbenplatte 17 ist eine Nadel 25 angeordnet. Die Nade 25 weist einen bundartigen Kopf 26 und einen im wesentlichen zylindrischen Schaft 27 auf. Der Kopf 26 befindet sich in einer absatzartigen Vertiefung 28 der Kolbenplatte 17; der Schaft 27 der Nadel 25 durchgreift eine Ausnehmung 29 der Kolbenplatte 17. Mittels einer nur schematisch angedeuteten Imbus-Schraube 30 wird die Nadel ortsfest an der Kolbenplatte 17 fixiert, so dass diese bei der Bewegung der Kolbenplatte 17 mitgenommen wird.

Der Schaft 27 der Nadel 25 durchgreift weiter mit geringem radialem Spiel eine durchgehende Ausnehmung 31 in der Abschlussplatte 15. In einem stufenförmigen Absatz der Ausnehmung 31 ist als zweites Dichtelement 32 ein O-Ring eingelegt und durch eine madenschraubenähnliche Befestigungsschraube 33, die eine axial durchgehende Ausnehmung aufweist, die vom Schaft 27 der Nadel 25 vollständig durchgriffen wird, fixiert und unter Vorspannung verpresst. Damit dichtet das Dichtelement 32, das unmittelbar an der Nadel 25 anliegt, den zweiten Arbeitsraum 19 bei freier axialer Beweglichkeit der Nadel 25 nach außen fluiddicht ab.

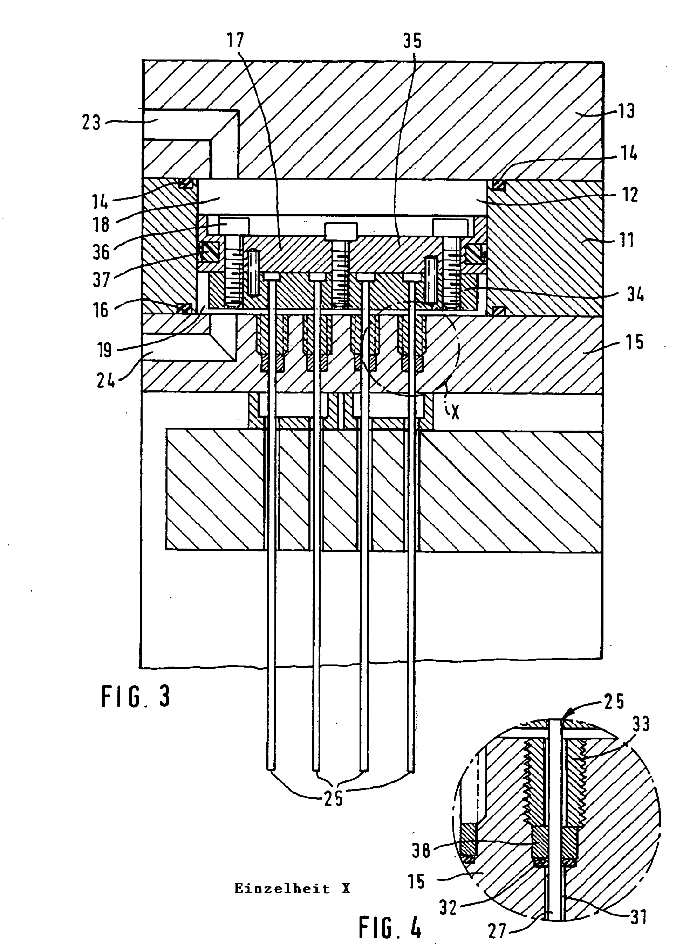

Das Ausführungsbeispiel der Erfindung nach Fig. 3 weist zunächst grundsätzlich den gleichen Aufbau mit Grundplatte 13, Zylinderplatte 11 und Abschlussplatte 15 auf. An der in der Aufnahme 12 axial beweglich geführten Kolbenplatte 17 sind jedoch im Gegensatz zum Ausführungsbeispiel nach Fig. 2 vier Nadeln 25 nebeneinander angeordnet.

Die Kolbenplatte ist bei diesem Ausführungsbeispiel zweiteilig ausgebildet mit einer Basisplatte 34, in der die Nadeln 25 in genau der gleichen Weise angeordnet sind wie beim vorstehend beschriebenen Ausführungsbeispiel, und einer Befestigungsplatte 35. Die ortsfeste Fixierung der nadeln 25 erfolgt bei diesem Ausführungsbeispiel über die Befestigungsplatte 35, die mit Schrauben 36 an der Basisplatte 34 befestigt ist.

Die Abdichtung der Kolbenplatte und damit eine fluiddichte Trennung der beiden Arbeitsräume 18 und 19 erfolgt hierbei über einen Lippendichtring 37, der in einer Nut in der Umfangsfläche der Befestigungsplatte 35 angeordnet ist.

Die abdichtende Durchführung der Nadeln 25 durch die Abschlussplatte dieses Ausführungsbeispiels ist der Fig. 4 zu entnehmen, die in vergrößerter Darstellung die Einzelheit X nach Fig. 3 zeigt.

Die Abschlussplatte 15 weist für jede Nadel 25 eine durchgehende Ausnehmung 31 auf. Die Ausnehmung 31 verengt sich in Richtung von der Kolbenplatte stufenförmig, wobei der Bereich mit dem geringsten Durchmesser noch ein zumindest geringes radiales Spiel zum Schaft 27 der Nadel 25 aufweist. In der Ausnehmung 31 ist ähnlich wie im vorstehend beschriebenen Ausführungsbeispiel ein O-Ring als zweites Dichtelement 32 angeordnet und mittels einer madenschraubenähnlichen Befestigungsschraube 33 dichtend verpresst. Im Gegensatz zum Ausführungsbeispiel nach Fig. 2 ist jedoch zwischen Befestigungsschraube 33 und dem O-Ring 32 ein buchsenförmiges Radialgleitlager 38 in der Ausnehmung 31 angeordnet, mit dem eine sichere Führung der Nadel 25 bei gleichzeitiger axialer Verschiebbarkeit erreichbar ist.

## Patentansprüche

1. Heißkanalspritzgusswerkzeug mit einer Vorrichtung zum Öffnen und Schließen von Einspritzdüsen, wobei die Einspritzdüse einen Düsenkörper aufweist, dessen Düsenöffnung durch eine Nadel öffen- und verschließbar ist,
wobei eine Mehrzahl von Nadeln (25) an einer Kolbenplatte (17; 34, 35) ortsfest angeordnet ist, die nach Art eines doppelt wirkenden Zylinders in einer Aufnahme (12) in beiden axialen Richtungen verschieblich gelagert ist,
wobei auf der den Nadeln abgewandten Seite der Kolbenplatte ein erster Arbeitsraum (18) und auf der gegenüberliegenden Seite der Kolbenplatte ein zweiter Arbeitsraum (19) gebildet ist, der zur Betätigung der Nadeln mit Fluid beaufschlagbar ist,
wobei zwischen einem der Kolbenplatte gegenüberliegenden Abschlusselement (15) und temperierten Bauteilen des Heißkanalspritzgusswerkzeugs ein temperaturisolierender Zwischenraum ausgebildet ist, und
wobei jede der Nadeln durch jeweils eine Ausnehmung (31) in dem der Kolbenplatte gegenüberliegenden Abschlusselement aus dem zweiten Arbeitsraum nach außen geführt ist, wobei der zweite Arbeitsraum durch ein erstes Dichtelement (22, 37), das zwischen der Innenwand der Aufnahme (12) und der Kolbenplatte angeordnet ist, und weitere Dichtelemente (32), die jeweils zwischen einer Wand einer der Ausnehmungen (31) und einer der Nadeln angeordnet sind und unmittelbar an den Nadeln zur Anlage gelangen,
fluiddicht abgeschlossen wird,
**gekennzeichnet durch**
Befestigungselemente (33), mit denen die weiteren Dichtelemente (32) vorgespannt fixiert sind.

2. Heißkanalspritzgusswerkzeug nach Anspruch 1,
**gekennzeichnet durch**
eine Grundplatte (13), eine Abschlussplatte (15) und eine zwischen der Grundplatte (13) und der Abschlussplatte (15) angeordnete Zylinderplatte (11), wobei in der Zylinderplatte die Aufnahme für die Kolbenplatte (17; 34,35) angeordnet ist, die Grundplatte (13) die Aufnahme (12) unter Bildung des ersten Arbeitsraums (18) und die Abschlussplatte (15) die Aufnahme (12) unter Bildung des zweiten Arbeitsraums (19) abschließt.

3. Heißkanalspritzgusswerkzeug nach Anspruch 2,
**dadurch gekennzeichnet,**
**dass** zwischen Grundplatte (13) und Zylinderplatte (11) ein die Aufnahme (12) im wesentlichen geschlossen umlaufendes Dichtelement (14) angeordnet ist.

4. Heißkanalspritzgusswerkzeug nach Anspruch 2 oder 3,
**dadurch gekennzeichnet,**
**dass** in der Grundplatte (13) eine in die Aufnahme (12) mündende Leitung (23) zur Zu- und Ableitung des Fluides angeordnet ist.

5. Heißkanalspritzgusswerkzeug nach einem der Ansprüche 2 bis 4,
**dadurch gekennzeichnet,**
**dass** zwischen Zylinderplatte (11) und Abschlussplatte (15) ein die Aufnahme (12) im wesentlichen geschlossen umlaufendes Dichtelement (16) angeordnet ist.

6. Heißkanalspritzgusswerkzeug nach einem der Ansprüche 2 bis 5,
**dadurch gekennzeichnet,**
**dass** in der Abschlussplatte (15) eine in die Aufnahme (12) mündende Leitung (24) zur Zu- und Ableitung des Fluides angeordnet ist.

7. Heißkanalspritzgusswerkzeug nach einem der Ansprüche 1 bis 6,
**dadurch gekennzeichnet,**
**dass** die Kolbenplatte (17; 34,35) im wesentlichen kreisscheibenförmig und die Aufnahme (12) dazu formkomplementär kreiszylindrisch ist.

8. Heißkanalspritzgusswerkzeug nach einem der Ansprüche 1 bis 7,
**dadurch gekennzeichnet,**
**dass** die Kolbenplatte (17; 34,35) im Bereich ihrer Außenumfangsfläche mit einer im wesentlichen geschlossen umlaufenden Ausnehmung (21) versehen ist, in der das erste Dichtelement (22, 37) angeordnet ist.

9. Heißkanalspritzgusswerkzeug nach einem der Ansprüche 1 bis 8,
**dadurch gekennzeichnet,**
**dass** das erste Dichtelement (22, 37) als O-Ring oder Lippendichtring ausgebildet ist.

10. Heißkanalspritzgusswerkzeug nach einem der Ansprüche 1 bis 9
**dadurch gekennzeichnet,**
**dass** die weiteren, jeweils zwischen einer Wand einer der Ausnehmungen (31) und einer der Nadeln (25) angeordneten Dichtelemente (32) als O-Ring oder Lippendichtring ausgebildet sind.

11. Heißkanalspritzgusswerkzeug nach einem der Ansprüche 1 bis 10,
**dadurch gekennzeichnet,**
**dass** zusätzlich zu den Dichtelementen (32) in der Ausnehmung (31) des Abschlusselementes bzw. der Abschlussplatte (15) jeweils ein Führungselement (38) zur Führung der Nadel (25) angeordnet ist.

12. Heißkanalspritzgusswerkzeug nach Anspruch 11,
**dadurch gekennzeichnet,**
**dass** das Führungselement (38) als insbesondere buchsenförmiges Radialgleitlager ausgebildet ist.

13. Heißkanalspritzgusswerkzeug nach Anspruch 11 oder 12,
**dadurch gekennzeichnet,**
**dass** das Führungselement (38) durch das Befestigungselement (33) vorgespannt fixiert ist.

14. Heißkanalspritzgusswerkzeug nach Anspruch 1 oder 13,
**dadurch gekennzeichnet,**
**dass** das Befestigungselement (33) nach Art einer Madenschraube in die Ausnehmung (31) einschraubbar ist und eine axial durchgehende Ausnehmung aufweist, die von der Nadel (25) mit zumindest geringem radialem Spiel durchgrei fbar ist.

## Claims

1. Hot injection moulding tool with a device for opening and closing injection nozzles, wherein the injection nozzle has a nozzle body whose nozzle opening can be opened and closed by means of a needle,
wherein a plurality of needles (25) are arranged in a stationary manner on a piston plate (17; 34, 35), which is mounted so that it can be displaced in both axial directions in a recess (12) in the manner of a double-action cylinder,
wherein a first working space (18) is formed on the side of the piston plate which faces away from the needles, and a second working space (19) is formed on the opposite side of the piston plate, to which space fluid can be applied in order to actuate the needles,
wherein a heat-insulating intermediate space is formed between a closure element (15), which is opposite the piston plate, and tempered components of the hot injection moulding tool, and
wherein each of the needles is guided outwards out of the second working space by means of in each case one cut-out (31) in the closure element, which is opposite the piston plate, wherein the second working space is closed in a fluid-tight manner by means of a first sealing element (22, 37), which is arranged between the inner wall of the recess (12) and the piston plate, and further sealing elements (32), which are in each case arranged between a wall of one of the cut-outs (31) and one of the needles and bear directly against the needles,
**characterised by**
fastening elements (33), with which the further sealing elements (32) are fixed in a pre-tensioned manner.

2. Hot injection moulding tool according to Claim 1,
**characterised by**
a base plate (13), a closure plate (15) and a cylinder plate (11), which is arranged between the base plate (13) and the closure plate (15), wherein the recess for the piston plate (17; 34, 35) is arranged in the cylinder plate, the base plate (13) closes the recess (12), forming the first working space (18), and the closure plate (15) closes the recess (12), forming the second working space (19).

3. Hot injection moulding tool according to Claim 2,
**characterised in that**
a sealing element (14), which run around the recess (12) in an essentially closed manner, is arranged between the base plate (13) and the cylinder plate (11) .

4. Hot injection moulding tool according to Claim 2 or 3,
**characterised in that**
a line (23) for feeding and removing the fluid, which line opens out into the recess (12), is arranged in the base plate (13).

5. Hot injection moulding tool according to one of Claims 2 to 4,
**characterised in that**
a sealing element (16), which runs around the recess (12) in an essentially closed manner, is arranged between the cylinder plate (11) and the closure plate (15).

6. Hot injection moulding tool according to one of Claims 2 to 5,
**characterised in that**
a line (24) for feeding and removing the fluid, which line opens out into the recess (12), is arranged in the closure plate (15).

7. Hot injection moulding tool according to one of Claims 1 to 6,
**characterised in that**
the piston plate (17; 34, 35) has an essentially circular disc shape and the recess (12) has in a complementary an essentially circular cylindrical shape.

8. Hot injection moulding tool according to one of Claims 1 to 7,
**characterised in that**
the piston plate (17; 34, 35) is provided in the region of its outer circumferential face with an essentially closed, circumferential cut-out (21), in which the first sealing element (22, 37) is arranged.

9. Hot injection moulding tool according to one of Claims 1 to 8,
**characterised in that**
the first sealing element (22, 37) is configured as an O-ring or lip seal ring.

10. Hot injection moulding tool according to one of Claims 1 to 9,
**characterised in that**
the further sealing elements (32), which are in each case arranged between a wall of one of the cut-outs (31) and one of the needles (25), are configured as an O-ring or lip seal ring.

11. Hot injection moulding tool according to one of Claims 1 to 10,
**characterised in that**
in each case a guide element (38) for guiding the needles (25) is arranged in the cut-out (31) of the closure element or the closure plate (15), in addition to the sealing elements (32).

12. Hot injection moulding tool according to Claim 11,
**characterised in that**
the guide element (38) is configured as an in particular socket-shaped radial sliding bearing.

13. Hot injection moulding tool according to Claim 11 or 12,
**characterised in that**
the guide element (38) is fixed in a pre-tensioned manner by means of the fastening element (33).

14. Hot injection moulding tool according to Claim 1 or 13,
**characterised in that**
the fastening element (33) can be screwed into the cut-out (31) in the manner of a headless screw and has an axially continuous cut-out, which can be penetrated by the needle (25) with at least a slight radial play.

## Revendications

1. Moule de moulage par injection à canaux chauffants avec un dispositif d'ouverture et de fermeture de pulvérisateurs, la buse d'injection comportant un corps de buse d'injection dont l'ouverture de buse d'injection est susceptible de s'ouvrir et de se fermer par une aiguille,
une pluralité d'aiguilles (25) étant disposée de façon stationnaire sur une plaque de pistons (17 ; 34, 35), qui à la manière d'un cylindre à double action est logé de façon déplaçable dans les deux directions axiales dans un logement (12),
sur le côté de la plaque de pistons qui est opposé aux aiguilles, une premier espace de travail (18) et sur le côté opposé, un deuxième espace de travail (19) étant formés, qui pour l'actionnement des aiguilles est susceptible d'être soumis à un fluide,
entre un élément de terminaison (15) opposé à la plaque de pistons et des éléments constitutifs tempérés du moule de moulage par injection à canaux chauffants, un espace intermédiaire d'isolation thermique étant réalisé, et
chacune des aiguilles étant guidée vers l'extérieur hors du deuxième espace de travail par chaque fois un évidement (31) dans l'élément de terminaison opposé à la plaque de pistons, le deuxième espace de travail étant terminé de façon étanche au fluide par un premier élément d'étanchéité (22, 37) qui est disposé entre la paroi intérieure du logement (12) et la plaque de pistons et des éléments d'étanchéité supplémentaires (32) qui sont disposés chacun entre une paroi de l'un des évidements (31) et l'une des aiguilles et qui viennent s'appliquer directement sur les aiguilles,
**caractérisé par**
des éléments de fixation (33) avec lesquels les éléments d'étanchéité supplémentaires (32) sont fixés en étant précontraints.

2. Moule de moulage par injection à canaux chauffants selon la revendication 1,
**caractérisé par**
une plaque de base (13), une plaque de terminaison (15) et une plaque de cylindre disposée entre la plaque de base (13) et la plaque de terminaison (15), dans la plaque de cylindre (11) étant disposé le logement pour la plaque de pistons (17 ; 34, 35), la plaque de base (13) terminant le logement (12) en formant le premier espace de travail (18) et la plaque de terminaison (15) terminant le logement (12) en formant le deuxième espace de travail (19).

3. Moule de moulage par injection à canaux chauffants selon la revendication 2,
**caractérisé en ce que**
entre la plaque de base (13) et la plaque de cylindre (11) est disposé un élément d'étanchéité (14) périphérique sensiblement fermé.

4. Moule de moulage par injection à canaux chauffants selon la revendication 2 ou 3,
**caractérisé en ce que**
dans la plaque de base (13) est disposé un conduit (23) débouchant dans le logement (12) pour l'alimentation et l'évacuation du fluide.

5. Moule de moulage par injection à canaux chauffants selon l'une quelconque des revendications 2 à 4,
**caractérisé en ce que**
entre la plaque de cylindre (11) et la plaque de terminaison (15) est disposé un élément d'étanchéité (16) entourant le logement (12) de manière sensiblement fermée.

6. Moule de moulage par injection à canaux chauffants selon l'une quelconque des revendications 2 à 5,
**caractérisé en ce que** dans la plaque de terminaison (15) est disposé un conduit (24) débouchant dans le logement (12) pour l'alimentation et l'évacuation du fluide.

7. Moule de moulage par injection à canaux chauffants selon l'une quelconque des revendications 1 à 6,
**caractérisé en ce que**
la plaque de piston (17 ; 34, 35) est de forme sensiblement discoïdale et **en ce que** le logement (12) est de forme cylindrique circulaire, complémentaire à celle-ci.

8. Moule de moulage par injection à canaux chauffants selon l'une quelconque des revendications 1 à 7,
**caractérisé en ce que**
la plaque de piston (17 ; 34, 35) est munie, dans la zone de sa surface périphérique extérieure d'un évidement (21) périphérique sensiblement fermé, dans lequel est disposé le premier élément d'étanchéité (22, 37).

9. Moule de moulage par injection à canaux chauffants selon l'une quelconque des revendications 1 à 8,
**caractérisé en ce que**
le premier élément d'étanchéité (22, 37) est réalisé sous la forme d'un joint torique ou d'une bague d'étanchéité à lèvre.

10. Moule de moulage par injection à canaux chauffants selon l'une quelconque des revendications 1 à 9,
**caractérisé en ce que**
les éléments d'étanchéité (32) supplémentaires, disposés chacun entre une paroi de l'un des évidements (31) et l'une des aiguilles (25) sont réalisés sous la forme d'un joint torique ou d'une bague d'étanchéité à lèvre.

11. Moule de moulage par injection à canaux chauffants selon l'une quelconque des revendications 1 à 10,
**caractérisé en ce que**
en supplément des éléments d'étanchéité (32) chaque fois un élément de guidage (38) pour guider l'aiguille (25) est disposé dans l'évidement (31) de l'élément de terminaison ou de la plaque de terminaison (15).

12. Moule de moulage par injection à canaux chauffants selon la revendication 11,
**caractérisé en ce que**
l'élément de guidage (38) est réalisé notamment en tant que palier lisse axial en forme de douille.

13. Moule de moulage par injection à canaux chauffants selon la revendication 11 ou 12,
**caractérisé en ce que**
l'élément de guidage (38) est fixé en étant précontraint par l'élément de fixation (33).

14. Moule de moulage par injection à canaux chauffants selon la revendication 1 ou 13,
**caractérisé en ce que**
l'élément de fixation (33) est susceptible d'être vissé à la manière d'une vis sans tête dans l'évidement (31) et comporte un évidement traversant en direction axiale, qui est susceptible d'être traversé par l'aiguille (25) avec au moins un faible jeu radial.
